Europäisches Patentamt

European Patent Office

Office européen des brevets

(19)

(11) Veröffentlichungsnummer: **0 097 813**
**A1**

(12) **EUROPÄISCHE PATENTANMELDUNG**

(21) Anmeldenummer: **83105094.3**

(22) Anmeldetag: **24.05.83**

(51) Int. Cl.³: **A 01 N 37/46**

(30) Priorität: **03.06.82 DE 3220885**

(43) Veröffentlichungstag der Anmeldung:
**11.01.84 Patentblatt 84/2**

(84) Benannte Vertragsstaaten:
**AT BE CH DE FR GB IT LI LU NL SE**

(71) Anmelder: **BAYER AG**
**Zentralbereich Patente, Marken und Lizenzen**
**D-5090 Leverkusen 1, Bayerwerk(DE)**

(72) Erfinder: **Charlet, Egbert, Dr.**
**Oelbergweg 13**
**D-5064 Roesrath(DE)**

(72) Erfinder: **Finkel, Peter**
**Isidor-Caro-Strasse 56**
**D-5000 Koeln 80(DE)**

(72) Erfinder: **Strickmann, Heribert**
**Galileistrasse 5**
**D-5000 Koeln 80(DE)**

(54) **Insektenvertreibungsmittel.**

(57) Insektenvertreibungsmittel auf der Basis von 3-(N-n-Butyl-N-acetyl)-amino-propionsäureethylester (BAAPE) in alkoholischer Lösung erhalten durch Zusatz von Polyethylenglykol eine verlängerte Wirksamkeit.

EP 0 097 813 A1

BAYER AKTIENGESELLSCHAFT        5090 Leverkusen, Bayerwerk
Zentralbereich
Patente, Marken und Lizenzen   Si-klu/c

Insektenvertreibungsmittel

Die vorliegende Erfindung betrifft Insektenvertreibungsmittel zur Anwendung auf der menschlichen Haut auf der
Basis von 3-(N-n-Butyl-acetyl)-aminopropionsäureethyl
ester (BAAPE) mit verlängerter Wirksamkeit.

BAAPE wurde als Insektenrepellent in der Deutschen Patentschrift 2 246 433 vom 27.3.75, sowie von Klier, M.,
Kuhlow, F; J.Soc.Cosm.Chem. 27, 141-153 (1976) beschrieben. Die Substanz gilt als gering toxisch, gut hautverträglich und zeichnet sich insbesondere als wirksames
Insektenrepellent zur Anwendung auf der menschlichen
Haut aus.

Die Prüfung der Wirksamkeitsdauer von Repellent-Formulierungen gegen Mücken erfolgt üblicherweise in vivo
an der Gelbfiebermücke (Aedes aegypti)./Lust, S.; Parf.
u. Kosm., 41, 304 (1960)_7 Hierzu werden jeweils 500
weibliche Mücken in einen mit Gaze bespannten Käfig
von 35 x 35 x 35 cm gegeben. Die Stechbereitschaft der
Mücken wird durch Einbringen eines Armes der jeweiligen Testperson überprüft. Als Kriterium einer positiven Stechbereitschaft gilt das Anfliegen, Stechen
und Saugen einer größeren Anzahl Mücken.

Le A 21 731-Ausland

Die Prüfung der Repellentien findet im Labor bei einer Temperatur von 22°C und einer relativen Luftfeuchtigkeit von 70 $\pm$ 10 % statt. Die Applikation der Testsubstanzen erfolgt unmittelbar vor Versuchsbeginn. Die Menge von 0,1 $\pm$ 0.01 ml Repellentsubstanz wird mit einem Glasstab möglichst gleichmäßig auf einer Fläche von 100 $cm^2$ auf dem Unterarm des Probanden aufgebracht. Danach wird die behandelte Fläche an den Rändern umklebt. Die restliche Armfläche wird mit einem Plastikhandschuh, der bis zu den Achseln reicht, bedeckt.

Dadurch kann eine Beeinträchtigung der Mücken durch Hautausscheidungen, die auf die Mücken attraktiv wirken, ausgeschlossen werden.

Der auf diese Weise behandelte Arm wird in den Mückenkäfig eingebracht, wobei der Kontakt der offenen Armfläche mit der Gaze verhindert wird, um eine Kontamination der Gaze und den gleichzeitigen Verlust von Repellentsubstanz von der Armfläche zu vermeiden. Das Einbringen des Armes erfolgt direkt nach der Applikation in stündlichem Abstand. Die Expositionszeit beträgt jeweils 5 Minuten. Das Ende der Wirkungsdauer einer Substanz wird angenommen, wenn sich während dieser Zeitspanne mindestens 2 Mücken auf der behandelten Fläche vollgesogen haben.

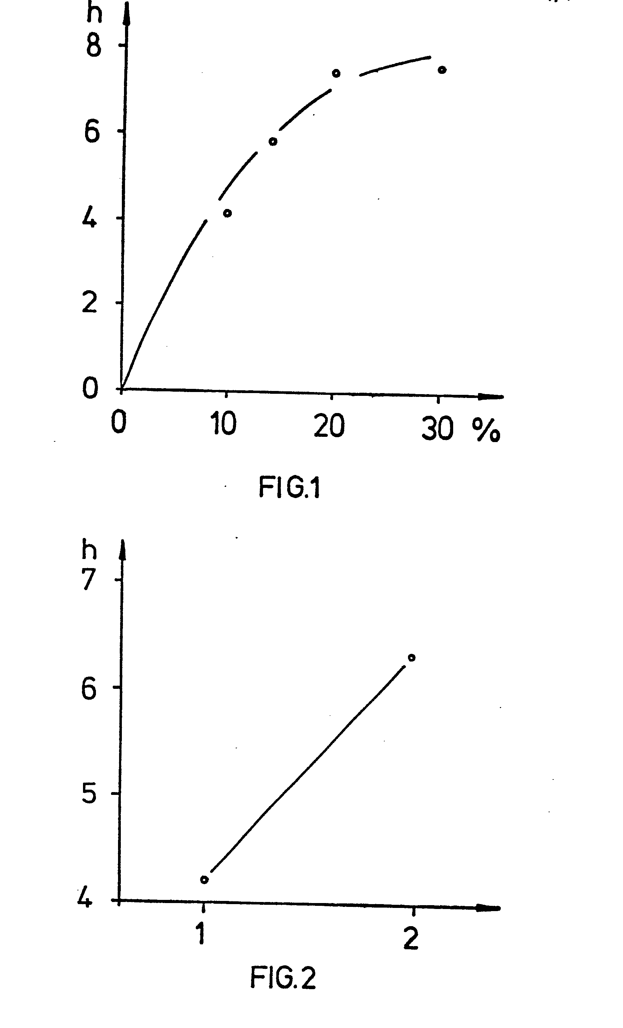

Fig. 1 zeigt die nach oben beschriebener Methodik ermittelte Abhängigkeit der Wirksamkeitsdauer von der

Le A 21 731

BAAPE-Konzentration. Auf der Abszisse wurde hierzu die Konzentration des BAAPE in % und auf der Ordinate die Wirksamkeitsdauer in Stunden aufgetragen.

Für eine wünschenswerte Wirksamkeitsdauer 6 bis 8 Stunden sind Konzentrationen von ca. 20 % erforderlich.

Es ist bekannt, daß den alkoholischen Lösungen von BAAPE auch andere Stoffe wie Parfümöle, Wasser, Lösungsvermittler und Fette zugesetzt werden. Diese Zusätze dienen zur Verbesserung von Duft, Konsistenz, Verteilbarkeit und Hautgefühl.

Außerdem sind Kombinationen mit anderen Repellentwirkstoffen/Charlet, E., Finkel, P., Strickmann, H.; Parf. u. Kosm. 59, 367 (1978)_7 bekannt.

Es wurden nun Stoffe gesucht, welche die Wirksamkeitsdauer erhöhen. Überraschenderweise konnte gefunden werden, daß durch Zusatz von Polyethylenglykol 400 (PEG 400) eine verbesserte Wirksamkeitsdauer erreicht wurde. PEG 400 besitzt selbst keine Repellent-Wirkung.

Fig. 2 zeigt einen Vergleich der Wirksamkeitsdauer von 10%igen BAAPE-Formulierungen ohne (1) und mit Zusatz von 20% PEG 400 (2).

Auf der Abszisse sind die beiden Formulierungen, auf der Ordinate die Wirksamkeitsdauer in Stunden aufgetragen. Die Wirksamkeitsdauer von 10 % BAAPE in Isopro-

- 4 -

panol wird durch Zusatz von 20 % PEG 400 von 4,2 Stunden auf 6,3 Stunden erhöht. Die Formulierung mit Zusatz von PEG 400 übertrifft damit die Wirksamkeitsdauer einer 15%igen BAAPE-Lösung ohne Zusatz.

Durch die erfindungsgemäßen Formulierungen wurden eine verlängerte Wirksamkeit beziehungsweise bei gleicher Wirksamkeit eine geringere Einsatzkonzentration des BAAPE erreicht.

Die Konzentration von BAAPE bei den erfindungsgemäßen Formulierungen liegt zwischen 3 und 40 %, vorzugsweise jedoch zwischen 5 und 25 %. Ganz besonders bevorzugt sind Konzentrationen zwischen 10 und 20 %.

Unter Berücksichtigung der kosmetischen Erfordernisse sollte die Konzentration von PEG 400 zwischen 5 und 35 %, vorzugsweise jedoch zwischen 15 und 25 % liegen.

Als Lösungsmittel eignen sich ein- und mehrwertige Alkohole wie z.B. Ethanol, Isopropanol, Propylenglykol oder Glycerin. Weitere Zusätze können sein: andere Repellentien /Charlet, E., Finkel, P., Strickmann, H.; Parf. u. Kosm. 59, 367 (1978) 7; Parfümöle zur Überdeckung des Eigengeruchs; Riechstoffe mit eigener Repellentwirkung (z.B. Citronenöl, Lavendelöl, Zimtöl), Wasser und kosmetische Grundstoffe wie z.B. Isopropylmyristat, Paraffinöl, usw. /Schrader, K.; Grundlagen und Rezepturen der Kosmetika, Dr. Alfred Hüthig Verlag Heidelberg, 19797.

Le A 21 731

- 5 -

Die erfindungsgemäßen Formulierungen werden wie die bekannten Formulierungen (Lotion/Spray) in verbrauchergerechter Menge auf frei getragene Haustellen aufgetragen.

Die Herstellung bzw. Abfüllung der erfindungsgemäßen Lotionen und Aerosole erfolgt wie in Nowak, G.A./⁻Die Kosmetischen Präparate, Verlag für chem. Industrie H. Ziolkowsky KG, Augsburg 1975_7beschrieben.

Die nachstehenden Beispiele geben einige typische Rezepturen.

Le A 21 731

| 1. | BAAPE | 5 Teile |
| | PEG 400 | 5 Teile |
| | Isopropanol | 90 Teile |

| 2. | BAAPE | 40 Teile |
| | PEG 400 | 35 Teile |
| | Isopropanol | 25 Teile |

| 3. | BAAPE | 20 Teile |
| | PEG 400 | 20 Teile |
| | Isopropanol | 60 Teile |

| 4. | BAAPE | 12 Teile |
| | PEG 400 | 8 Teile |
| | Ethanol | 60 Teile |
| | Wasser | 20 Teile |

| 5. | BAAPE | 25 Teile |
| | PEG 400 | 25 Teile |
| | Isopropanol | 30 Teile |
| | Ethanol | 19 Teile |
| | Parfümöl | 1 Teil |

| 6. | BAAPE | 15 Teile |
| | PEG 400 | 20 Teile |
| | Wasser | 5 Teile |
| | Isopropylmyristat | 2 Teile |
| | Isopropanol | 57 Teile |
| | Lavendelöl | 1 Teil |

| 7. | BAAPE | 18 Teile |
| | PEG 400 | 12 Teile |
| | Dimethylphthalat | 4 Teile |
| | Ethanol | 65 Teile |
| | Parfümöl | 1 Teil |

| 8. | BAAPE | 15 Teile |
| | PEG 400 | 15 Teile |
| | Ethylhexandiol | 5 Teile |
| | Isopropanol | 57 Teile |
| | Wasser | 5 Teile |
| | Propylenglykol | 2 Teile |
| | Parfümöl | 1 Teil |

| 9. | BAAPE | 10 Teile |
| | PEG 400 | 12 Teile |
| | Paraffinöl | 2 Teile |
| | Isopropanol | 75 Teile |
| | Parfümöl | 1 Teil |

| 10. | BAAPE | 10 Teile |
| | PEG 400 | 15 Teile |
| | Propylenglykol | 15 Teile |
| | Isopropanol | 60 Teile |

| 11. | BAAPE | 15 Teile |
| | PEG 400 | 13 Teile |
| | Glycerin | 10 Teile |
| | Wasser | 8 Teile |
| | Isopropanol | 53 Teile |
| | Parfümöl | 1 Teil |

Le A 21 731

Patentansprüche

1. Insektenvertreibungsmittel, enthaltend 3-(N-n-Butyl-N-acetyl)-aminopropionsäureethylester (BAAPE) auf der Basis alkoholischer Lösungen, dadurch gekennzeichnet, daß sie zusätzlich Polyethylenglykol 400 (PEG 400) enthalten.

2. Insektenvertreibungsmittel nach Anspruch 1, dadurch gekennzeichnet, daß sie 3 - 40 %, vorzugsweise 5 - 25 %, besonders bevorzugt 10 - 20 % BAAPE enthalten.

3. Insektenvertreibungsmittel nach Anspruch 1, dadurch gekennzeichnet, daß sie 5 - 35 %, vorzugsweise 15 - 25 % PEG 400 enthalten.

4. Insektenvertreibungsmittel nach Anspruch 1, dadurch gekennzeichnet, daß sie weitere Repellentien enthalten.

5. Insektenvertreibungsmittel nach Anspruch 1, dadurch gekennzeichnet, daß sie Parfümöl und/oder Riechstoffe enthalten.

6. Insektenvertreibungsmittel nach Anspruch 1, dadurch gekennzeichnet, daß sie Wasser enthalten.

Le A 21 731

FIG.1

FIG.2

**Europäisches Patentamt**

# EUROPÄISCHER RECHERCHENBERICHT

EP  83 10 5094

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB-A-2 054 377 (FICHTEL & SACHS) * Seite 2, Zeilen 12-17; Seite 3, Zeilen 50-64 * | 1-6 | A 01 N 37/46 |
| D,Y | DE-A-2 246 433 (BEIERSDORF AG.) * Seite 3, letzter Absatz - Seite 4, erster Absatz; Seite 13, Beispiel 1 * | 1-6 | |
| X | US-A-3 803 303 (G.H. McKIBBEN) | 1-6 | |

| RECHERCHIERTE SACHGEBIETE (Int. Cl. ³) |
|---|
| A 01 N |

Der vorliegende Recherchenbericht wurde für alle Patentansprüche erstellt.

| Recherchenort DEN HAAG | Abschlußdatum der Recherche 15-09-1983 | Prüfer DECORTE D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

\& : Mitglied der gleichen Patentfamilie, übereinstimmendes Dokument

EPA Form 1503. 03.82